(19) Europäisches Patentamt

European Patent Office

Office européen des brevets

(11) **EP 2 193 611 B1**

(12) **FASCICULE DE BREVET EUROPEEN**

(45) Date de publication et mention de la délivrance du brevet:
**09.03.2011 Bulletin 2011/10**

(21) Numéro de dépôt: **08838378.1**

(22) Date de dépôt: **05.09.2008**

(51) Int Cl.:
**H04B 7/04** (2006.01)

(86) Numéro de dépôt international:
**PCT/FR2008/051581**

(87) Numéro de publication internationale:
**WO 2009/047416 (16.04.2009 Gazette 2009/16)**

(54) **PROCEDE D'EMISSION ET DE RECEPTION D'UN SIGNAL DANS UN SYSTEME MULTI-ANTENNES METTANT EN OEUVRE UN PRECODAGE SPATIAL, EMETTEUR, RECEPTEUR, ET PRODUITS PROGRAMME D'ORDINATEUR CORRESPONDANTS**

VERFAHREN ZUM SENDEN UND EMPFANGEN EINES SIGNALS IN EINEM MEHRANTENNENSYSTEM MITHILFE RÄUMLICHER VORKODIERUNG, SENDEGERÄT UND EMPFANGSGERÄT DAFÜR SOWIE ENTSPRECHENDE COMPUTERPROGAMMPRODUKTE

METHOD FOR EMITTING AND RECEIVING A SIGNAL IN A MULTI-ANTENNA SYSTEM, USING SPATIAL PRECODING, AND CORRESPONDING EMITTER, RECEIVER, AND COMPUTER PROGRAM PRODUCTS

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **20.09.2007 FR 0757727**

(43) Date de publication de la demande:
**09.06.2010 Bulletin 2010/23**

(73) Titulaire: **FRANCE TELECOM**
**75015 Paris (FR)**

(72) Inventeurs:
• **LAYEC, Patricia**
**F-92290 Chatenay Malabry (FR)**
• **VISOZ, Raphaël**
**F-92130 Issy Les Moulineaux (FR)**
• **BERTHET, Antoine**
**F-92290 Chatenay Malabry (FR)**

(74) Mandataire: **Guy, Marion**
**Cabinet Vidon**
**Technopôle Atalante**
**16B rue de Jouanet**
**35703 Rennes Cedex 7 (FR)**

(56) Documents cités:
EP-A- 1 255 369          EP-A- 1 850 506
WO-A-2006/002550     WO-A-2006/037835
US-A1- 2003 139 139

• LAYEC P ET AL: "Achieving High Spectral Efficiency with Adaptive Layered Space Time Codes under Rate Control" COMMUNICATIONS, 2007. ICC '07. IEEE INTERNATIONAL CONFERENCE ON, IEEE, PI, 1 juin 2007 (2007-06-01), pages 725-731, XP031125757 ISBN: 978-1-4244-0353-0 cité dans la demande

**Description**

**1. Domaine de l'invention**

Le domaine de l'invention est celui des communications numériques. Plus précisément, l'invention concerne l'émission et la réception de signaux dans le cadre de systèmes multi-antennes de type MIMO (de l'anglais « Multiple-Input Multiple-Output » pour « Entrées Multiples Sorties Multiples»).

L'invention trouve notamment des applications dans le domaine des radiocommunications, dans des systèmes présentant des canaux de transmission sélectifs en fréquence (systèmes de type monoporteuse) ou non sélectifs en fréquence (systèmes de type multiporteuse, par exemple de type OFDM, en anglais « Orthogonal Frequency Division Multiplexing »).

En particulier, l'invention se situe au niveau de la couche physique de réseaux d'accès mobiles multi-antennes, et peut s'appliquer aux communications sur voie montante (d'un terminal vers une station de base), ainsi qu'aux communications sur voie descendante (d'une station de base vers un terminal).

**2. Art antérieur**

Les techniques d'émission/réception de signaux numériques dans des systèmes multi-antennes présentent de nombreux avantages, notamment pour les réseaux d'accès mobiles. En particulier, de telles techniques permettent une augmentation des débits et/ou de la fiabilité des transmissions dans le cadre de communications sans fil.

On connaît selon l'art antérieur une technique de transmission bien adaptée aux systèmes MIMO dans lesquels le canal de transmission varie. Cette technique, encore appelée adaptation de lien, consiste à adapter les ressources utilisées à l'émission en fonction d'une information représentative du canal de transmission. Cette technique nécessite donc une voie de retour (encore appelée « feedback ») entre le récepteur et l'émetteur, apportant à l'émetteur une connaissance (généralement partielle) du canal de transmission.

En particulier, cette adaptation de lien peut être dynamique, et permettre de s'adapter aux variations instantanées du canal de transmission, en cherchant à maximiser le débit du lien radio tout en respectant une certaine qualité de service, comme par exemple un taux d'erreurs binaires maximum.

Pour ce faire, on modifie le schéma de modulation et codage MCS (de l'anglais « Modulation and Coding Scheme ») affecté à chaque antenne d'émission, c'est-à-dire à chaque flux de données, et facultativement les puissances d'émission allouées à chaque flux de données. On rappelle que dans un système multi-antennes, le signal source à émettre est émis sous la forme d'un ensemble de flux de données entre les antennes d'émission et les antennes de réception.

Le document "Achieving High Spectral Efficience with Adaptive Layered Space Time Codes under Rate Control" de P. Layec, R. Visoz, et A.O. Berthet (ICC 2007 - IEEE) présente notamment un système de transmission multi-antennes mettant en oeuvre une adaptation de lien dynamique. On combine selon cette technique un codage espace-temps à une architecture de type PARC (de l'anglais « Per Antenna Rate Control»), mettant en oeuvre un contrôle de rendements par antenne. On rappelle qu'on entend classiquement par « rendement » un choix de schéma de modulation et codage MCS, c'est-à-dire qu'il comprend :

- le rendement du code de canal : par exemple 1/4, 1/3, 1/2, etc ;
- l'ordre de la modulation choisie : par exemple de type BPSK (en anglais « Binary Phase Shift Keying », en français « modulation de phase à 2 états »), QPSK (en anglais « Quadrature PSK », en français «modulation de phase en quadrature »), 16QAM (en anglais « 16-Quadrature Amplitude Modulation », en français « modulation d'amplitude en quadrature à 16 états »), etc.

Plus précisément, la technique présentée dans le document précité fait l'hypothèse d'un jeu de rendements discrets disponibles. A l'inverse, on rappelle que les résultats de la théorie de l'information se basent sur une précision infinie des rendements et des puissances d'émission, et supposent ainsi une voie de retour infinie, ce qui est irréalisable en pratique.

Afin de compenser la dégradation de la capacité générée par l'opération de discrétisation, on cherche selon cette technique de l'art antérieur à optimiser conjointement les rendements discrets et la puissance affectée à chaque antenne d'émission, en répartissant les antennes d'émission dans des groupes d'antennes.

Ainsi, un récepteur peut déterminer les MCS (ou rendements discrets) par groupe d'antennes à utiliser en émission pour minimiser l'écart avec les performances théoriques, à partir de la connaissance d'une famille de schémas MCS disponible en émission (selon la norme d'émission par exemple), et transmettre ces éléments à l'émetteur dans une voie de retour, par exemple dans un message CQI (de l'anglais « Channel Quality Indicator »).

Le système de transmission possède ainsi une partition adaptative d'une remontée d'information à une autre, afin de lutter contre le bruit de quantification, ou bien définie lors de la configuration du système et fixée pendant toute la durée de la transmission.

Cependant, un inconvénient de cette technique de l'art antérieur est qu'elle repose sur l'hypothèse d'une transmission des flux de données indépendante par antenne d'émission, c'est-à-dire que la matrice de covariance du signal à transmettre est de forme diagonale, générant ainsi de l'interférence entre les flux de données.

## 3. Exposé de l'invention

L'invention propose une solution nouvelle qui ne présente pas l'ensemble de ces inconvénients de l'art antérieur, sous la forme d'un procédé d'émission d'un signal d'un émetteur vers un récepteur via un canal de transmission, sous la forme d'un ensemble de flux de données entre $N_T$ antennes d'émission et $N_R$ antennes de réception, avec $N_T$ et $N_R$ supérieurs ou égaux à 2.

Selon l'invention, un tel procédé comprend :

- une étape de répartition des antennes d'émission en plusieurs groupes d'au moins une antenne, au moins un groupe comprenant deux antennes, en fonction d'au moins une information représentative du canal de transmission ;
- une étape d'attribution d'un rendement à chacune des antennes d'émission ;
- une étape d'allocation d'une puissance d'émission à chacun desdits flux de données ; et
- une étape de précodage spatial du signal, mettant en oeuvre une matrice de précodage diagonale par blocs comprenant au moins deux blocs, chaque bloc étant associé à un des groupes d'antennes.

Ainsi, en plus de regrouper les antennes d'émission par groupes, l'invention propose d'appliquer un précodage à chaque groupe d'antennes d'émission.

Un tel précodage spatial permet notamment d'émettre sur les modes propres des sous-canaux de transmission. Plus précisément, un « sous-canal » correspond au canal de transmission entre les antennes d'émission d'un groupe considéré, associé à un bloc de la matrice de précodage, et les antennes de réception. Le canal de transmission entre l'émetteur et le récepteur est donc partiellement décorrélé.

En revanche, on rappelle que selon l'art antérieur, aucune transformation linéaire, permettant de décomposer le canal MIMO en plusieurs canaux SISO (de l'anglais «Single-Input Single-Output», pour « entrée unique sortie unique ») mutuellement non interférents, n'est effectuée avant la transmission des données.

De cette façon, le signal reçu selon l'invention est moins perturbé.

En particulier, la partition des antennes d'émission en différents groupes, c'est-à-dire le nombre de groupes et le nombre d'antennes composant chaque groupe, peut être figée (par exemple en fonction de l'application considérée, ou de la norme d'émission). Dans ce cas, l'étape de répartition des antennes d'émission permet de déterminer quelle antenne d'émission est affectée à quel groupe, selon la partition figée. Par exemple, si l'on considère une partition $\Gamma$ comprenant trois groupes $\Delta_1, \Delta_2, \Delta_3$, où $\Delta_1$ comprend deux antennes d'émission ($|\Delta|=2$), $\Delta_2$ comprend deux antennes d'émission ($|\Delta_2|=2$), et $\Delta_3$ comprend un antenne d'émission ($|\Delta_3|=1$), et si l'on considère un émetteur comprenant cinq antennes d'émission $N_{T1}$ à $N_{T5}$, alors l'étape de répartition des antennes affecte par exemple les antennes $N_{Ti}$ et $N_{T2}$ au groupe $\Delta_1$. les antennes $N_{T3}$ et $N_{T4}$ au groupe $\Delta_2$, et l'antenne $N_{T5}$ au groupe $\Delta_3$. De manière plus générale, une partition est définie par $\Gamma = \{\Delta_1, ..., \Delta_K\}$, avec $\forall i \in \{1, ..., K\}, \forall j \in \{1, ..., K\}$ $\bigcup_i \Delta_i = \{1, ..., N_T\}$ et $j \neq i : \Delta_i \cap \Delta_j = \varnothing$.

Cette étape de répartition peut être mise en oeuvre de façon périodique et/ou en fonction d'une variation du canal de transmission.

Par exemple, en considérant de nouveau la partition figée r, l'étape de répartition des antennes affecte par exemple les antennes $N_{T3}$ et $N_{T5}$ au groupe $\Delta_1$, les antennes $N_{T1}$ et $N_{T2}$ au groupe $\Delta_2$, et l'antenne $N_{T4}$ au groupe $\Delta_3$, en fonction d'une information remontée par le récepteur relative à une variation du canal de transmission. Si le canal de transmission est invariant, la répartition des antennes d'émission n'est pas nécessairement mise à jour. En revanche, une mise à jour peut être nécessaire en cas de modification des puissances et/ou des rendements attribués aux antennes d'émission.

La partition des antennes d'émission (c'est-à-dire le nombre de groupes et le nombre d'antennes par groupe) peut également être adaptative, et modifiée périodiquement et/ou en fonction d'une variation du canal de transmission.

On peut également noter que selon l'invention, on attribue un rendement à chacune des antennes d'émission, et une puissance d'émission à chacun des flux de données. Les rendements ne sont donc pas affectés pour chaque groupe d'antennes, mais spécifiquement pour chaque antenne d'émission. On peut noter qu'un tel codage scalaire (c'est-à-dire suivant la dimension temporelle seulement) est plus facile à décoder qu'un codage espace-temps.

En particulier, les rendements sont choisis parmi un ensemble prédéterminé de rendements discrets. Ce choix est fonction d'au moins une contrainte imposée par le récepteur, comme le type du récepteur (par exemple de type à annulations successives d'interférences).

Par exemple, l'ensemble prédéterminé de rendements est défini dans une table de rendements, fixée par la norme. Cet ensemble est également appelé jeu de schémas de modulation et codage MCS.

De même, les vecteurs de précodage formant les blocs de la matrice de précodage peuvent être définis dans une table de précodage, encore appelée « codebook », également définie dans la norme.

Selon une caractéristique particulière de l'invention, l'étape de précodage comprend une sous-étape d'obtention des vecteurs propres associés à chacun des blocs.

A partir de ces vecteurs propres, qui sont orthonormaux, on détermine les puissances d'émission de chaque flux de données, et on émet le signal sur les valeurs propres non nulles de chacun des sous-canaux. On rappelle qu'un sous-canal correspondant au canal de transmission entre les antennes d'émission d'un groupe, associé à un bloc de la matrice de précodage, et les antennes de réception.

En particulier, le procédé d'émission selon l'invention comprend une étape de mise à jour d'au moins un élément appartenant au groupe comprenant :

- au moins un desdits blocs ;
- au moins un desdits rendements ;
- au moins une desdites puissances d'émission ;
- au moins un vecteur de précodage, chaque bloc de la matrice de précodage comprenant au moins un vecteur de précodage ;

en fonction d'une information de retour du récepteur.

Cette mise à jour peut être effectuée périodiquement, en fonction d'une variation du canal de transmission, en fonction d'une requête d'un utilisateur, en fonction de la modification d'un paramètre d'émission, etc. On peut noter que ces différents éléments peuvent être mis à jour même si la répartition des antennes d'émission n'a pas été modifiée.

Selon un aspect particulier de l'invention, le procédé d'émission comprend une étape de réception d'au moins un élément appartenant au groupe comprenant :

- une information relative à la répartition en groupes des antennes d'émission ;
- l'information représentative du canal de transmission ;
- les rendements attribués à chacune des antennes d'émission ;
- la matrice de précodage ;
- les blocs formant ladite matrice de précodage ;
- des vecteurs de précodage pour construire la matrice de précodage ;
- des valeurs de puissance d'émission requise pour chaque flux de données, pour chaque groupe d'antennes d'émission, ou pour l'ensemble des antennes d'émission.

En effet, on rappelle que selon l'invention, la répartition en groupes des antennes d'émission peut être déterminée côté récepteur en fonction de l'information représentative du canal de transmission, puis transmise à l'émetteur, ou bien déterminée côté émetteur, suite à la réception de l'information représentative du canal de transmission.

De même, la matrice de précodage peut être déterminée côté récepteur, et transmise à l'émetteur, ou bien les blocs ou les vecteurs de précodage formant la matrice de précodage peuvent être déterminés côté récepteur, et transmis à l'émetteur qui détermine la matrice de précodage correspondante, etc.

Un autre mode de réalisation de l'invention concerne un émetteur apte à émettre un signal à destination d'un récepteur via un canal de transmission, sous la forme d'un ensemble de flux de données entre $N_T$ antennes d'émission et $N_R$ antennes de réception, avec $N_T$ et $N_R$ supérieurs ou égaux à 2.

Selon ce mode de réalisation, l'émetteur comprend :

- des moyens de répartition des antennes d'émission en plusieurs groupes d'au moins une antenne, au moins un groupe comprenant deux antennes, en fonction d'au moins une information représentative du canal de transmission ;
- des moyens d'attribution d'un rendement à chacune des antennes d'émission ;
- des moyens d'allocation d'une puissance d'émission à chaque flux de données ; et
- des moyens de précodage spatial du signal, mettant en oeuvre une matrice de précodage diagonale par blocs comprenant au moins deux blocs, chaque bloc étant associé à un des groupes d'antennes.

Un tel émetteur est notamment adapté à mettre en oeuvre le procédé d'émission décrit précédemment. Il s'agit par exemple d'une station de base, ou d'un terminal de type radiotéléphone, ordinateur portable, assistant personnel de type PDA (en anglais « Personal Digital Assistant »), selon que l'on soit en lien montant ou descendant.

Un autre aspect de l'invention concerne un procédé de réception d'un signal reçu, correspondant à un signal émis par un émetteur à destination d'un récepteur via un canal de transmission, sous la forme d'un ensemble de flux de données entre $N_T$ antennes d'émission et $N_R$ antennes de réception, avec $N_T$ et $N_R$ supérieurs ou égaux à 2.

Selon l'invention, un tel procédé de réception comprend :

- une étape d'obtention, en fonction d'une information représentative du canal de transmission, d'au moins une répartition des antennes d'émission en plusieurs groupes d'au moins une antenne, au moins un groupe comprenant deux antennes ;
- une étape de détermination d'un rendement à attribuer à chacune desdites antennes d'émission ;
- une étape de détermination d'une puissance d'émission à allouer à chaque flux de données ;
- une étape de détermination d'une matrice de précodage diagonale par bloc comprenant au moins deux blocs, chaque bloc étant associé à un desdits groupes d'antennes ; et
- une étape de transmission à l'émetteur desdits rendements, desdites puissances d'émission , et de ladite matrice de précodage.

Ainsi, selon cet aspect de l'invention, c'est le récepteur qui détermine les rendements à attribuer à chaque antenne d'émission, les puissances d'émission associées aux flux de données, ainsi que la matrice de précodage spatial correspondante.

En particulier, les rendements sont choisis parmi un ensemble prédéterminé de rendements discrets.

On tient compte des caractéristiques du récepteur et du canal de transmission pour optimiser les rendements attribués à chaque antenne d'émission, les puissances d'émission allouées à chaque flux de données, ainsi que pour répartir les données à émettre sur les différentes antennes d'émission, grâce au précodage spatial.

Selon une caractéristique particulière de l'invention, le récepteur est un récepteur de type à annulations successives d'interférences (SIC).

L'invention concerne, selon un autre mode de réalisation, un récepteur apte à recevoir un signal reçu, correspondant à un signal émis par un émetteur via un canal de transmission, sous la forme d'un ensemble de flux de données entre $N_T$ antennes d'émission et $N_R$ antennes de réception, avec $N_T$ et $N_R$ supérieurs ou égaux à 2.

Selon ce mode de réalisation, un tel récepteur comprend :

- des moyens d'obtention, en fonction d'une information représentative du canal de transmission, d'au moins une répartition des antennes d'émission en plusieurs groupes d'au moins une antenne, au moins un groupe comprenant deux antennes ;
- des moyens de détermination d'un rendement à attribuer à chacune desdites antennes d'émission ;
- des moyens de détermination d'une puissance d'émission à allouer à chacun desdits flux de données ;
- des moyens de détermination d'une matrice de précodage diagonale par bloc comprenant au moins deux blocs, chaque bloc étant associé à un desdits groupes d'antennes ; et
- des moyens de transmission à l'émetteur des rendements, des puissances d'émission et de la matrice de précodage.

Un tel dispositif de réception est notamment adapté à mettre en oeuvre le procédé de réception décrit précédemment. Il s'agit par exemple d'une station de base, ou d'un terminal de type radiotéléphone, ordinateur portable, assistant personnel de type PDA (en anglais « Personal Digital Assistant »), selon que l'on soit en lien montant ou descendant.

Un autre aspect de l'invention concerne un système de transmission formé d'un émetteur comprenant $N_T$ antennes d'émission et d'un récepteur comprenant $N_R$ antennes de réception, avec $N_T$ et $N_R$ supérieurs ou égaux à 2.

Un tel système permet d'émettre un signal sous la forme d'un ensemble de flux de données entre les $N_T$ antennes d'émission et les $N_R$ antennes de réception.

Selon l'invention, le récepteur comprenant des moyens d'obtention, en fonction d'une information représentative d'un canal de transmission entre l'émetteur et le récepteur, d'au moins une répartition des antennes d'émission en plusieurs groupes d'au moins une antenne, au moins un groupe comprenant deux antennes, et l'émetteur comprenant des moyens de répartition des antennes d'émission selon la répartition :

- le récepteur comprend également :

  - des moyens de détermination d'un rendement à attribuer à chacune des antennes d'émission ;
  - des moyens de détermination d'une puissance d'émission à allouer à chacun des flux de données ;
  - des moyens de détermination d'une matrice de précodage diagonale par bloc comprenant au moins deux blocs, chaque bloc étant associé à un des groupes d'antennes ; et
  - des moyens de transmission audit émetteur des rendements, des puissances d'émission, et de la matrice de précodage ;

- et l'émetteur comprend également :

  - des moyens d'attribution des rendements aux antennes d'émission ;
  - des moyens d'allocation des puissances d'émission auxdits flux de données ;
  - des moyens de précodage spatial du signal à émettre, mettant en oeuvre la matrice de précodage.

En particulier, le récepteur est un récepteur de type à annulations successives d'interférences (SIC).

Encore un autre aspect de l'invention concerne un produit programme d'ordinateur téléchargeable depuis un réseau de communication et/ou enregistré sur un support lisible par ordinateur et/ou exécutable par un processeur, comprenant des instructions de code de programme pour la mise en oeuvre du procédé d'émission décrit ci/dessus, et/ou un produit programme d'ordinateur téléchargeable depuis un réseau de communication et/ou enregistré sur un support lisible par ordinateur et/ou exécutable par un processeur, comprenant des instructions de code de programme pour la mise en oeuvre du procédé de réception décrit ci-dessus.

## 4. Liste des figures

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :

- la figure 1 illustre les principales étapes du procédé d'émission selon un mode de réalisation particulier de l'invention ;
- les figures 2 et 3 présentent respectivement un exemple de schéma d'émission et de schéma de réception dans un contexte mono-utilisateur ;
- la figure 4 propose un exemple de schéma d'émission dans un contexte multi-utilisateurs ;
- les figures 5 et 6 présentent respectivement la structure simplifiée d'un émetteur et d'un récepteur selon un mode de réalisation particulier de l'invention.

## 5. Description d'un mode de réalisation de l'invention

### 5.1 Principe général

Le principe général de l'invention repose sur la mise en oeuvre d'un précodage spatial en émission, dans un système multi-antennes comprenant au moins deux antennes d'émission $N_T \geq 2$ et deux antennes de réception $N_R \geq 2$. On rappelle en effet qu'un multiplexage spatial des données permet d'atteindre de hautes efficacités spectrales.

Plus précisément, les antennes d'émission sont regroupées par groupe d'antennes, en fonction d'au moins une information représentative du canal de transmission entre l'émetteur et le récepteur. Il existe donc une voie de retour entre le récepteur et l'émetteur, apportant à l'émetteur une connaissance partielle du canal de transmission. Cette voie de retour permet également d'adapter la répartition des antennes d'émission en fonction des variations du canal de transmission.

Le précodage spatial selon l'invention met alors en oeuvre une matrice de précodage diagonale par blocs comprenant au moins deux blocs, chaque bloc étant associé à un des groupes d'antennes.

Ainsi, alors que la technique de l'art antérieur présentée dans le document *"Achieving High Spectral Efficiency with Adaptive Layered Space Time Codes under Rate Control* propose de transmettre des flux de données indépendants par antenne d'émission, c'est-à-dire un contrôle de puissance mis en oeuvre par une matrice de covariance du signal émis diagonale, la présente invention repose sur l'utilisation d'un bloc de précodage par groupe d'antenne, l'ensemble des blocs de précodage formant une matrice de précodage. La matrice de covariance du signal émis, formée par la matrice de précodage et les puissances d'émission, est donc diagonale par bloc.

La mise en oeuvre d'un précodage spatial en émission permet notamment d'émettre sur les modes propres des sous-canaux de transmission. Ainsi, le canal de transmission est partiellement décorrélé, ce qui permet de limiter l'interférence en réception.

Pour ce faire, on détermine les vecteurs propres de chacun des blocs, de façon à transmettre le signal sur les valeurs propres non nulles de chacun des sous-canaux. On peut noter que les blocs de la matrice de précodage peuvent être réactualisés régulièrement, ou en fonction de variations du canal de transmission, ou en fonction d'un changement dans un paramètre d'émission, etc. Il existe donc une voie de retour entre le récepteur et l'émetteur (éventuellement distincte de la voie de retour transmettant à l'émetteur une information pour la répartition en groupes des antennes d'émission), permettant de réactualiser les paramètres d'émission (rendements et/ou puissance et/ou matrice de précodage).

De plus, on attribue selon l'invention un rendement spécifique à chacune des antennes d'émission, c'est-à-dire un rendement scalaire, et non plus un rendement par groupe d'antennes.

Cette caractéristique a notamment pour effet d'avoir une complexité de décodage plus faible.

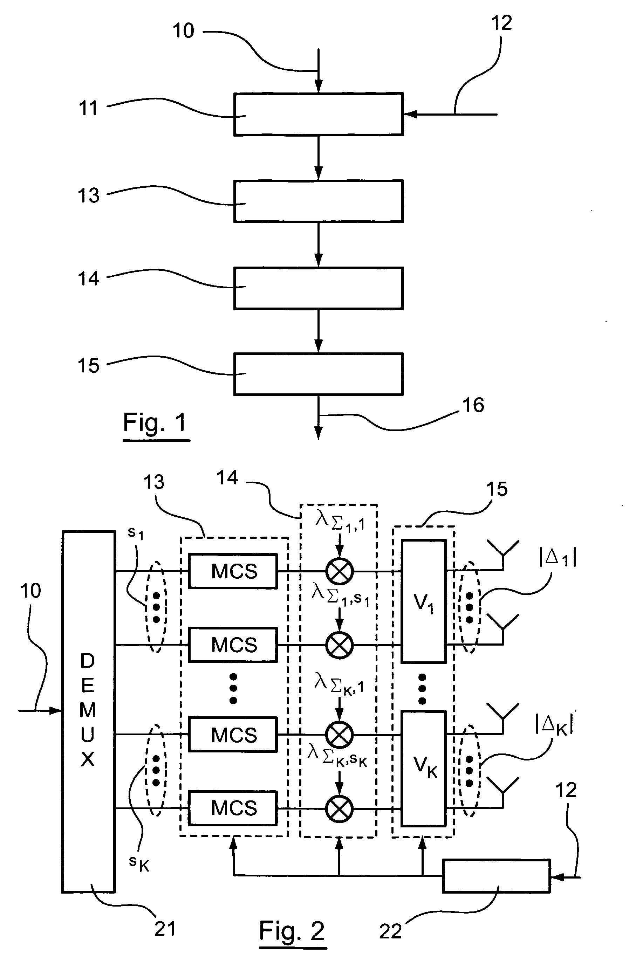

On présente notamment, en relation avec la figure 1, les principales étapes du procédé d'émission d'un signal de données source 10 selon l'invention.

Au cours d'une première étape 11, les antennes d'émission sont réparties en plusieurs groupes d'antennes, au moins un groupe comprenant deux antennes. Cette répartition 11 est effectuée en tenant compte d'au moins une information représentative du canal de transmission. Plus précisément, le récepteur peut déterminer une répartition optimale en fonction de l'information représentative du canal de transmission, et transmettre (12) cette répartition à l'émetteur dans une voie de retour, ou bien transmettre (12) directement l'information représentative du canal de transmission à l'émetteur, qui détermine lui-même la répartition optimale.

On attribue ensuite un rendement (13) à chacune des antennes d'émission et une puissance d'émission (14) à chacun des flux de données.

Au cours d'une étape suivante 15, le signal subit un précodage spatial, mettant en oeuvre une matrice de précodage diagonale par blocs comprenant au moins deux blocs, chaque bloc étant associé à un des groupes d'antennes.

Le signal 16 ainsi précodé est alors émis sur les modes propres des sous-canaux de transmission, entre chaque groupe d'antennes d'émission et les **antennes de réception.**

### *5.2 Description d'un mode de réalisation particulier, dans un contexte mono-utilisateur*

*A) Schémas d'émission et de réception*

On décrit ci-après un mode de réalisation particulier de l'invention, permettant de maximiser l'efficacité spectrale du système multi-antennes en respectant des contraintes de qualité de service à disposition et une connaissance partielle du canal à l'émission.

Plus précisément, on décrit ci-après un algorithme original permettant d'obtenir des blocs de précodage par groupe maximisant les performances de transmission, et compatible avec un récepteur simplifié. On discute également des informations à transmettre dans la (ou les) voie(s) de retour entre le récepteur et l'émetteur.

Ainsi, selon ce mode de réalisation particulier, les antennes d'émission sont réparties en groupes, et l'émetteur met en oeuvre un précodage spatial par groupe, diminuant ainsi la charge de la voie de retour. Pour une partition donnée, l'émetteur est optimisé par un traitement conjoint entre les blocs de précodage associés à chacun des groupes d'antennes d'émission, les puissances d'émission allouées sur chaque flux de données, et la sélection des rendements pour chaque antenne d'émission (correspondant à un choix de MCS). On maximise ainsi l'efficacité spectrale au regard notamment des MCS allouables sur chaque mode propre non-nul des sous-canaux de transmission.

On se place plus précisément dans un contexte MIMO point-à-point, correspondant à un utilisateur (un émetteur) comprenant $K$ groupes d'antennes.

Selon ce mode de réalisation particulier de l'invention, on contraint également l'émission en supposant une réception de type à annulations successives d'interférences. Avec cette contrainte, les blocs de précodage sont construits pour être adaptés à un récepteur SIC. Le vecteur le plus proche dans la table de précodage (« codebook ») est ensuite sélectionné. La réception s'en trouve ainsi facilitée.

Cette optimisation conjointe sous contrainte permet ainsi de diminuer le bruit de quantification, et donc d'augmenter les performances de transmission, notamment en termes d'efficacité spectrale.

On peut également noter que la quantité d'informations nécessaire transmise sur la voie de retour dépend de la partition choisie. Ce choix est notamment fonction du compromis performance/quantité d'informations transportées voulu.

En particulier, plus le nombre de groupes est important, plus la quantité d'informations retournées à l'émetteur diminue (proportionnellement à la taille des blocs de précodage). On rappelle que le nombre de groupe K est strictement supérieur à 1 (c'est-à-dire qu'il y a au moins deux groupes d'antennes), et strictement inférieur à $N_T$ (ce qui signifie qu'au moins un des groupes comprend deux antennes d'émission).

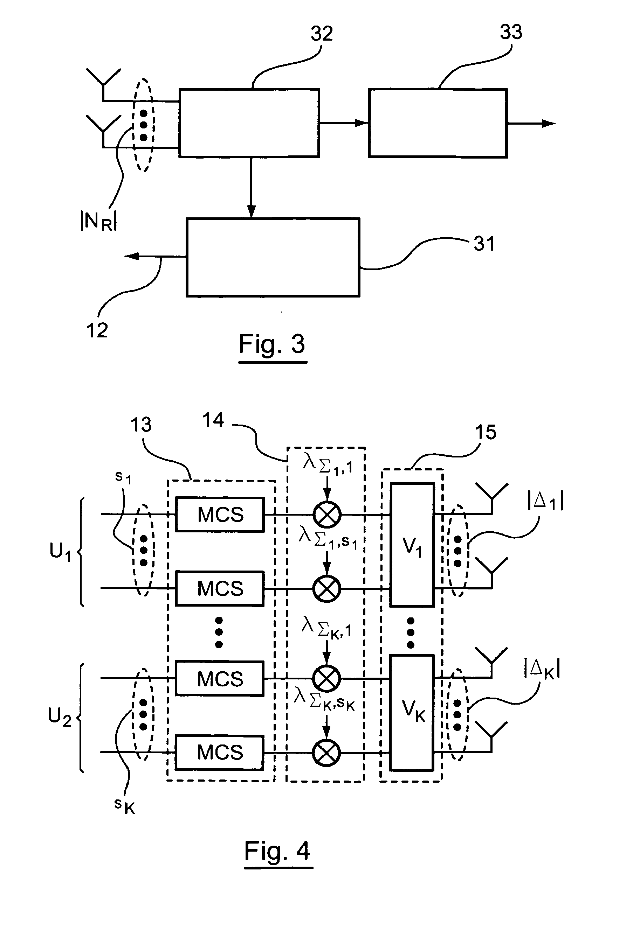

On décrit ci-après en relation avec les figures 2 et 3 un schéma d'émission et un schéma de réception selon ce mode de réalisation particulier de l'invention.

Comme illustré en figure 3, on considère que les étapes de détermination des rendements, des puissances d'émission et des blocs de précodage sont mises en oeuvre conjointement par le récepteur au cours d'une étape 31, en tenant compte des contraintes suivantes :

- contraintes de qualité de service souhaitée, tenant compte :

■ d'un ensemble prédéterminé de rendements discrets disponibles (ou ordre des modulations et rendements de codes disponibles, permettant une quantification des rendements et des puissances d'émission) ; et/ou

■ d'un taux d'erreur binaire (en anglais BER pour « Binary Error Rate ») ou taux d'erreur par trame (en anglais FER pour « Frame Error Rate ») requis ; et/ou

■ d'une table de précodage disponibles (permettant de définir les vecteurs de précodage adaptés à un récepteur SIC simple, et donc les blocs de précodage, et la matrice de précodage) ; et/ou

■ d'une puissance totale à redistribuer sur les flux de données ;

■ etc ;

- information sur le canal de transmission (par exemple issue d'une estimation du canal de transmission ou du rapport signal à bruit-plus-interférences, en anglais SINR « Signal-to-Interference-plus-Noise Ratio »).

Ainsi, le signal reçu par le récepteur sur les $N_R$ antennes de réception est tout d'abord traité pour réaliser une estimation du canal de transmission 32. Cette estimation 32 est prise en compte pour la détermination et l'adaptation (31) des rendements, des puissances d'émission et des blocs de précodage, ainsi que pour le décodage (33) du signal ou du paquet reçu.

On rappelle que l'ensemble des blocs de précodage forme une matrice de précodage adaptée selon ce mode de réalisation particulier à un récepteur SIC simple, chaque bloc étant associé à un groupe distinct d'antennes d'émission. On note $V_k$ le bloc de précodage associé au groupe $k$, avec $1 \le k \le K$.

En particulier, les puissances d'émission sont déterminées à partir d'applications de l'algorithme de Waterfilling (en français « chutes d'eau »). On rappelle que l'algorithme de type Waterfilling permet de distribuer la puissance d'émission principalement sur les modes propres forts du canal de transmission, c'est-à-dire les voies expérimentant de bonnes conditions radio, tandis que peu, voire pas de puissance est allouée sur les voies expérimentant de mauvaises conditions radio.

Selon ce mode de réalisation de l'invention, on applique ainsi un algorithme de type Waterfilling itératif (en anglais « Iterative Waterfilling »), comprenant des opérations de Waterfilling, sur le système comprenant K groupes d'antennes.

En particulier, la mise en oeuvre d'un algorithme de type Iterative Waterfilling sur les K groupes d'antennes permet d'obtenir de meilleures performances asymptotiques, puisque l'invention dépend davantage selon ce mode de réalisation des liens radios plus faibles.

Ensuite, ces paramètres d'émission (rendements, puissances d'émission et blocs de précodage) sont transmis à l'émetteur dans une voie de retour 12.

Par exemple, le signalement de ces paramètres d'émission peut être effectué en attribuant séparément un CQI par antenne pour le choix d'un rendement (MCS) ou d'une puissance, et un CQI par groupe pour le choix du bloc de précodage. La voie de retour porte donc $N_T$ valeurs de rendements pour attribuer un rendement à chaque antenne d'émission, $N_T$ valeurs de puissance pour attribuer une puissance à chaque flux de données, et $K$ valeurs de blocs de précodage pour attribuer un bloc de précodage à chaque groupe.

Selon une autre variante, il est possible d'énumérer toutes les configurations possibles de rendements (soient $N_{MCS}$ rendements discrets disponibles), de puissances d'émission discrètes (quantifiées sur $N_{pwr}$ niveaux différents) et de blocs de précodage $V_k$ (soient $N_{V_k}$ blocs disponibles) déterminés conjointement. De cette façon, un seul CQI est remonté désignant simultanément tous les paramètres d'émission.

Le nombre de bits $b$ nécessaire pour ce CQI est donné par :

$$ b = \left\lceil \log_2 \left[ N_{MCS}^{N_T} \cdot N_{pwr}^{N_T} \cdot N_{V_k}^{K} \right] \right\rceil ; $$

où l'opérateur $\lceil \ \rceil$ désigne la partie entière supérieure.

Selon cette variante, une table de correspondance de taille plus importante est par conséquent nécessairement stockée à l'émission et à la réception. Une ligne de cette table de correspondance correspond à la combinaison de $N_T$ MCS (chacun étant choisi parmi la table de rendements discrets), de $N_T$ puissances d'émission, et des K blocs de précodage (chacun étant choisi parmi la table de précodage).

L'énumération conjointe selon cette variante utilise ainsi au plus autant de bits que le nombre de bits utilisés pour le signalement des paramètres d'émission transmettant chaque information séparément.

A réception des paramètres d'émission, l'émetteur peut attribuer les rendements et les puissances d'émission, mettre à jour la matrice de précodage, et continuer la transmission du signal.

Plus précisément, comme illustré en figure 2, les antennes d'émission sont groupées en $K$ groupes, dont la cardinalité est comprise entre 1 et $N_R$.

Le signal de données source 10 en entrée de l'émetteur est tout d'abord démultiplexé au cours d'une étape DEMUX 21, et converti en un nombre de flux indépendants correspondant au nombre de valeurs propres non nulles du sous canal de transmission.

Par exemple, si l'on considère le bloc de précodage $V_k$ associé au groupe d'antennes d'émission $\Delta_k$, de cardinalité $|\Delta_k|$, on obtient $s_k$ valeurs propres non nulles, avec $s_k = \min(N_R, |\Delta_k|)$.

K

On obtient ainsi $\displaystyle\sum_{k=1}^{K} s_k$ flux indépendants.

On attribue ensuite un rendement scalaire (MCS 13) et une puissance d'émission (14) à chacun des flux indépendants, en fonction des informations portées par la voie de retour 12 et extraite par le contrôleur 22. En particulier, on note $\lambda_i(\Sigma_k)$ le $i^{\text{ème}}$ élément diagonal de la matrice $\Sigma_k$ extraite par le contrôleur 22, la matrice $\Sigma_k$ définissant les puissances à attribuer à chaque flux de données du groupe $k$.

Un précodage spatial (15) est alors mis en oeuvre, au moyen d'une matrice de précodage diagonale par blocs composée des blocs $V_1$, $V_2$,..., $V_K$. Le précodage est donc effectué par groupe d'antennes.

On transmet ainsi le signal de données sur les $s_k$ valeurs propres non nulles de chaque sous-canal associé à chaque groupe k.

*B) Détermination des paramètres d'émission*

On décrit ci-après les étapes de détermination des rendements, des puissances, et des blocs de précodage, permettant d'optimiser la capacité du système de transmission.

Pour ce faire, on cherche à réduire une fonction de coût associée au système multi-antennes, en optimisant la capacité globale du système de transmission. Le critère d'optimisation de la capacité globale, encore appelée somme-capacité discrète, s'appuie sur la connaissance du canal **H** de transmission (entre l'émetteur et le récepteur) en réception, du rapport signal à bruit SNR $\rho$ , du budget de puissance disponible à répartir $P$ , du jeu de MCS, des rendements effectivement choisis parmi l'ensemble de rendements disponible en fonction de la qualité de service désirée, etc, et peut s'exprimer de la façon suivante :

$$ T = \max_{\left\{ \Theta_{\mathbf{x}_{\Delta_k}} \right\}_{k=1}^{K}} \sum_{k=1}^{K} \sum_{i=1}^{s_k} R_{k,i} \qquad (1) $$

avec les rendements discrets alloués :

$$ R_{k,i} = \arg \min_{R \in J,\, R_{k,i} \leq C_{k,i}} C_{k,i} - R \qquad (2) $$

R étant un rendement choisi dans la table de rendements discrets notée J. et sous les contraintes suivantes :

$$ \Theta_{\mathbf{x}_{\Delta_k}} \geq 0,\; \sum_{k=1}^{K} tr(\Theta_{\mathbf{x}_{\Delta_k}}) \leq P \qquad (3) $$

La matrice de covariance $\Theta_{\mathbf{x}_{\Delta_k}}$ correspondant aux flux de données émis par le groupe $k$ est définie par le bloc de précodage $V_k$ et les puissances d'émission $\Sigma_k$, tel que :

$$\Theta_{\mathbf{x}_{\Delta_k}} = \mathbf{V}_k \Sigma_k \mathbf{V}_k^{\dagger}.$$

On rappelle ci-après la définition de la capacité théorique par couche, encore appelée scalaire ou par antenne, où le terme correctif Y permet de prendre en compte des contraintes de qualité de service :

$$C_{k,i} = \log_2\left(1 + \frac{\lambda_i(\Sigma_k)\lambda_i(\mathbf{B}_k)}{\gamma}\right) \qquad (4)$$

où :

$$\mathbf{B}_k = \mathbf{H}_{\Delta_k}^{\dagger} \Theta_{\mathbf{z}_k}^{-1} \mathbf{H}_{\Delta_k}$$

$$\Theta_{\mathbf{z}_k} = \sum_{j \geq k+1} \mathbf{H}_{\Delta_j} \Theta_{\mathbf{x}_{\Delta_j}} \mathbf{H}_{\Delta_j}^{\dagger} + \mathbf{I}_{N_R} \qquad (5)$$

avec :

- $\dagger$ l'opérateur transposé conjugué ;
- $I_{N_R}$ la matrice identité de taille $N_R$ ; et
- $\mathbf{H}_{\Delta_k}$ représente un sous-canal de transmission, correspondant au canal de transmission entre les antennes du groupe *k* et les antennes de réception, tel que $\mathbf{H} = [\mathbf{H}_{\Delta_1}...\mathbf{H}_{\Delta_K}]$.

On présente ci-après des solutions approchées pour l'optimisation de la capacité globale du système de transmission. Ces solutions sont sous-optimales, mais garantissent une faible complexité ainsi que des performances intéressantes.

On suppose ainsi que l'erreur de quantification relative aux blocs de précodage est suffisamment faible, et permet ainsi de se placer dans la base optimale d'un Waterfilling par groupe. Autrement dit, on suppose que la table de précodage (codebook) comporte un nombre suffisant de blocs de précodage, ou de vecteurs de précodage permettant de construire les blocs de précodage.

De plus, on contraint l'émission à un récepteur à annulations successives d'interférences. Les blocs de précodage correspondent donc à la base d'un Waterfilling pour chaque étage du SIC vectoriel (ou de manière équivalente, sont les vecteurs propres de $\mathbf{B}_k$ dans l'équation (5)).

L'architecture du récepteur optimal se réduit donc à un filtre blanchissant suivi d'annulations successives d'interférences grâce à la considération de cette base optimale.

On détaille en relation avec les annexes A, B et C des algorithmes de détermination des paramètres d'émission.

Les algorithmes proposés laissent une liberté dans l'ordonnancement (en anglais « scheduling ») des différentes étapes de détermination grâce aux indices d'itérations *M* et *N*, ave *M et N* deux entiers positifs. Ils sont omis pour plus de clarté dans la description des étapes ci-après. Le nombre d'itérations *M* et *N* est déterminé afin d'atteindre la convergence de l'algorithme, ou encore afin de limiter la complexité de calcul. Par exemple, on a *M* =3 pour le premier algorithme (algorithme 1) et *M*=2 *N* = 3 pour le deuxième algorithme (algorithme 2).

Ainsi, le calcul de la puissance requise peut se ramener à l'équation suivante :

$$\lambda_i\left(\Sigma_k\right) = \frac{\left(2^{R_{k,i}} - 1\right)\gamma}{\lambda_i\left(\mathbf{B}_k\right)} \qquad (6)$$

Comme déjà indiqué précédemment, l'opération de quantification sur la puissance impose d'arrondir le résultat à la valeur entière supérieure, afin de pouvoir supporter le MCS choisi.

Plus précisément, l'annexe A illustre un premier algorithme (algorithme 1) pour la détermination des paramètres d'émission dans un système mono-utilisateur (ou MIMO point à point) mettant en oeuvre une contrainte de puissance par groupe.

L'algorithme 1 propose ainsi d'intégrer à chaque itération $k$ avec $k \in \{1,K\}$, c'est-à-dire pour chaque groupe d'antennes, les opérations de quantification et de redistribution de puissance. Cet algorithme se base donc sur algorithme de type Waterfilling itératif (en anglais « iterative Waterfilling »), permettant d'optimiser les blocs de précodage en émission avec une contrainte de puissance séparée pour chaque groupe. On peut également noter que, par rapport aux techniques de type Waterfilling itératif classiques, l'algorithme proposé prend en compte la discrétisation des valeurs (de rendements et/ou de puissance) lors de l'optimisation des blocs de précodage et fait l'hypothèse d'un récepteur SIC. Une autre différence réside dans le fait que, dans le cas mono-utilisateur, la contrainte de puissance à respecter est globale : on augmente donc le budget de puissance du groupe $k+1$ avec la puissance restante du groupe $k$.

L'algorithme 1 initie tout d'abord les blocs de précodage à zéro $\left\{\Theta_{\mathbf{x}_{\Delta_k}}\right\}_{k=1}^{K}$, ainsi que le budget de puissance alloué à chaque groupe $\left\{P_k\right\}_{k=1}^{K}$ respectant la contrainte du budget de puissance $\sum_{k=1}^{K} P_k = P$.

Par exemple, selon une variante particulière, on répartit le budget de puissance équitablement entre tous les groupes afin de ne pas favoriser ou défavoriser un des groupes d'antennes.

L'annexe B illustre un deuxième algorithme (algorithme 2) pour la détermination des paramètres d'émission dans un système mono-utilisateur mettant en oeuvre une contrainte de puissance globale.

Ainsi, l'algorithme 2 tient compte d'une contrainte de puissance globale. L'étape 2 se base donc sur un algorithme de type Waterfilling itératif avec une contrainte de puissance globale (en anglais « sum power iterative Waterfilling »).

De nouveau, on peut noter que l'algorithme proposé prend en compte la discrétisation des valeurs (de rendements et/ou de puissance) lors de l'optimisation des blocs de précodage et fait l'hypothèse d'un récepteur SIC.

Finalement, l'annexe C illustre un troisième algorithme (algorithme 3) pour la détermination des paramètres d'émission dans un système mono-utilisateur, dans lequel le récepteur a une architecture de type MMSE-SIC (en anglais « minimum mean square error » pour « minimisation de l'erreur quadratique moyenne »).

On considère un cas particulier de l'invention selon lequel l'erreur de quantification sur le bloc de précodage $\mathbf{V}_k$ est non négligeable.

Plus précisément, si la métrique entre les blocs de précodage déterminés à partir des vecteurs de précodage issus du codebook associé au récepteur, et les blocs de précodage issus des vecteurs propres de $\mathbf{B}_k$ est importante, alors le récepteur optimal a une architecture de type MMSE-SIC, sous l'hypothèse d'entrées gaussiennes indépendantes.

Le canal équivalent $\tilde{\mathbf{H}}$, prenant en compte l'étape précodage, est alors défini par :

$$\tilde{\mathbf{H}} = \left[\, \mathbf{H}_{\Delta_1}\bar{\mathbf{V}}_1 \dots \mathbf{H}_{\Delta_K}\bar{\mathbf{V}}_K \,\right].$$

L'expression de la capacité théorique pour chaque flux indépendant s'exprime donc de la manière suivante :

$$C_i = \log_2\left(1 + \rho\tilde{\mathbf{h}}_i^{\dagger}\left(\mathbf{I}_{N_R} + \sum_{j\in S} P_j\tilde{\mathbf{h}}_j\tilde{\mathbf{h}}_j^{\dagger}\right)^{-1}\tilde{\mathbf{h}}_i\right) \qquad (12)$$

avec : $\tilde{\mathbf{h}}_i$ la $i^{\text{ème}}$ colonne de la matrice du canal équivalent $\tilde{\mathbf{H}}$ ;
$S$ le sous-ensemble d'antennes d'émission comprenant les indices d'antennes correspondant aux flux indépendants restant à décoder.

Selon ce cas particulier, et comme illustré dans l'algorithme 3, il est nécessaire de prendre en compte le traitement de l'interférence lors de l'optimisation des paramètres d'émission.

On peut noter que l'algorithme 3 propose une optimisation des paramètres d'émission en tenant compte d'une contrainte de puissance par groupe d'antennes. De nouveau, il est également possible d'optimiser les paramètres d'émission en tenant compte d'une contrainte de puissance globale, comme proposé dans l'algorithme 2.

On peut également noter que ces trois algorithmes mettant en oeuvre une technique de Waterfilling par groupe proposent une redistribution de la puissance inutilisée lors de l'allocation des rendements.

Plus précisément, la prise en compte de l'effet de la discrétisation sur des systèmes multi-antennes mettant en oeuvre une technique de type Waterfilling amène à reconsidérer la façon d'allouer la puissance. Ainsi, les puissances sont d'abord fixées dans un groupe grâce à l'algorithme classique du Waterfilling. Les matrices de covariances sont ensuite générées avec les vecteurs propres de $\mathbf{B}_k$.

Une fois les rendements attribués, la puissance nécessaire effectivement nécessaire est recalculée. On utilise alors la puissance restante pour augmenter, si possible, un ou plusieurs rendements discrets. S'il reste de la puissance inutilisée, bien qu'insuffisante pour augmenter la somme-capacité, elle est redistribuée sur les différentes antennes du groupe suivant afin de diminuer le taux d'erreur binaire.

### 5.3 Description d'un mode de réalisation particulier, dans un contexte multi-utilisateurs

On se place désormais dans un contexte multi-utilisateurs, dans lequel $K$ utilisateurs sont présents.

On considère une configuration dite « uplink » représentant le lien montant entre les terminaux de communication (par exemple mobiles) et la station de base. On parle dans cette configuration de canal MIMO à accès multiple (en anglais « Multiple Access Channel (MAC) »). Les $K$ utilisateurs selon cette configuration correspondent donc aux différents terminaux de communication, et le récepteur correspond à la station de base.

Les algorithmes 1 et 3 présentés respectivement en annexes A et C, peuvent être utilisés pour déterminer les paramètres d'émission dans ce contexte. En particulier, on peut noter que dans le cas d'un canal MIMO MAC, il est nécessaire de restaurer la contrainte de puissance individuelle.

Par conséquent, l'octroi de la puissance résiduelle pour augmenter le budget de puissance du groupe d'antennes suivant doit être supprimé, ce qui correspond à supprimer l'étape 6 de l'algorithme 1 ou de l'algorithme 3.

La figure 4 illustre plus précisément un schéma d'émission dans ce contexte multi-utilisateurs MIMO MAC mettant en oeuvre $K$ utilisateurs. On associe selon ce mode de réalisation un groupe d'antennes, et donc un bloc de précodage, à chaque utilisateur $U_1$, ..., $U_K$. On utilise les mêmes notations et références que celles de la figure 2 pour désigner les éléments communs.

Ainsi, on considère selon ce mode de réalisation que chaque utilisateur expérimente un état du canal noté $\mathbf{H}_{\Delta 1},...,\mathbf{H}_{\Delta K}$, où $\mathbf{H}_{\Delta i}$ représente l'état du canal de transmission pour l'utilisateur i.

### 5.4 Structure du dispositif d'émission

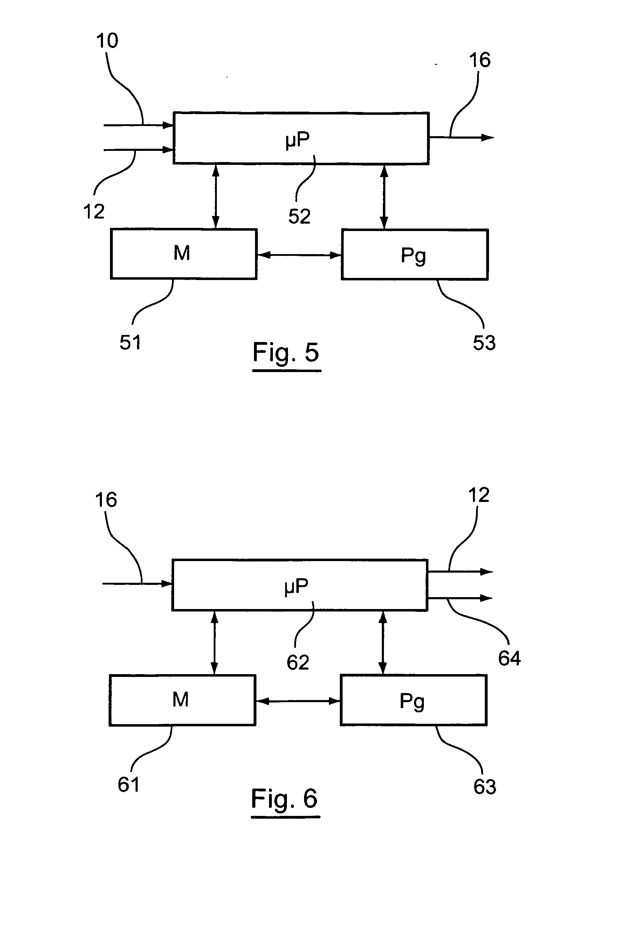

On présente finalement, en relation avec les figures 5 et 6, la structure simplifiée d'un émetteur et d'un récepteur mettant respectivement en oeuvre une technique d'émission et une technique de réception selon le mode de réalisation particulier décrit ci-dessus.

Comme illustré en figure 5, un émetteur selon ce mode de réalisation particulier comprend une mémoire 51 constituée d'une mémoire tampon, une unité de traitement 52, équipée par exemple d'un microprocesseur $\mu$P, et pilotée par le programme d'ordinateur 53, mettant en oeuvre le procédé d'émission selon l'invention.

A l'initialisation, les instructions de code du programme d'ordinateur 53 sont par exemple chargées dans une mémoire RAM avant d'être exécutées par le processeur de l'unité de traitement 52. L'unité de traitement 52 reçoit en entrée un signal de données source à émettre 10, ainsi que des informations en provenance du récepteur 12 (par exemple les paramètres d'émission ou des informations permettant de déterminer ces paramètres d'émission, la répartition des antennes ou une information représentative du canal de transmission, etc).

Le microprocesseur de l'unité de traitement 52 met en oeuvre les étapes du procédé d'émission décrit précédemment, selon les instructions du programme d'ordinateur 53. Pour cela, l'émetteur comprend, outre la mémoire tampon 51, des moyens de répartition des antennes d'émission en plusieurs groupes d'antenne, des moyens d'attribution d'un rendement à chacune des antennes d'émission, des moyens d'allocation d'une puissance à chacun des flux de données, et des moyens de précodage spatial du signal.

Ces moyens sont pilotés par le microprocesseur de l'unité de traitement 52.

L'unité de traitement 52 transmet donc au récepteur un signal 16 précodé, émis selon les paramètres d'émission précédemment définis.

Comme illustré en figure 6, un récepteur selon le mode de réalisation décrit comprend une mémoire 61 constituée d'une mémoire tampon, une unité de traitement 62, équipée par exemple d'un microprocesseur $\mu$P, et pilotée par le programme d'ordinateur 63, mettant en oeuvre le procédé de réception selon l'invention.

A l'initialisation, les instructions de code du programme d'ordinateur 63 sont par exemple chargées dans une mémoire RAM avant d'être exécutées par le processeur de l'unité de traitement 62. L'unité de traitement 62 reçoit en entrée un signal reçu, correspondant au signal émis 16.

Le microprocesseur de l'unité de traitement 62 met en oeuvre les étapes du procédé de réception décrit précédemment, selon les instructions du programme d'ordinateur 63. Pour cela, le récepteur comprend, outre la mémoire tampon 61, des moyens d'obtention d'au moins une répartition des antennes d'émission en plusieurs groupes d'antennes, des moyens de détermination d'un rendement à attribuer à chacune des antennes d'émission, des moyens de détermination d'une puissance d'émission à allouer à chacun des flux de données, des moyens de détermination d'une matrice de précodage diagonale par bloc, et des moyens de transmission à l'émetteur des rendements, des puissances et de la matrice de précodage ainsi déterminés.

Ces moyens sont pilotés par le microprocesseur de l'unité de traitement 62.

L'unité de traitement 62 délivre donc le signal de données décodé, ou des paquets décodés 64, ainsi que des paramètres d'émission à transmettre à l'émetteur dans une voie de retour 12.

En particulier, un tel récepteur est de type SIC.

## ANNEXE A

| Algorithme 1 |
| --- |

**Init** Initialisation de chaque matrice de covariance à zéro : $\{\Theta_{\mathbf{x}_{\Delta_k}}\}_{k=1}^{K} = 0$

Le budget de puissance de chaque groupe est fixé à : $\{P_k\}_{k=1}^{K}$

**pour** $m = 1$ *à* $M$ **faire**

**pour** $k = 1$ *à* $K$ **faire**

**Etape 1** Génération des canaux composites

$$\mathbf{G}_{\Delta_k} = \left(\sum_{j=k}^{\prime} \mathbf{H}_{\Delta_j} \Theta_{\mathbf{x}_{\Delta_j}} \mathbf{H}_{\Delta_j}^{\dagger} + \mathbf{I}_{N_R}\right)^{-1/2} \mathbf{H}_{\Delta_k} \tag{7}$$

**Etape 2** Application du waterfilling sur $\mathbf{G}_{\Delta_k}$ avec la puissance $P_k$. On obtient $\Sigma_k$.

**Etape 3** Génération de la matrice de covariance $\Theta_{\mathbf{x}_{\Delta_k}}$ à partir de la matrice de précodage orthonormale $\mathbf{V}_k$ qui correspond aux vecteurs propres de $\mathbf{B}_k$.

**Etape 4** Allocation des rendements scalaires discrets :

**pour** $i = 1$ *à* $s_k$ **faire**

Avec les $C_{k,i}$ calculés en équation (4), sélection du rendement discret correspondant, cf. équation (2). Calcul de la puissance minimale nécessaire pour supporter le rendement choisi (par exemple équation (6)), quantification de cette valeur et mise à jour de $\lambda_i(\Sigma_k)$.

**tant que** $\sum_{j=1}^{s_k} \lambda_j(\Sigma_k) > P_k$ **faire**

Sélection du rendement discret directement inférieur. Calcul de la puissance minimale pour ce rendement, quantification et mise à jour de $\lambda_i(\Sigma_k)$.

Ensuite, déduction de la puissance résiduelle du groupe $k$ :

$$P_{res} = P_k - \sum_{i=1}^{s_k} \lambda_i(\Sigma_k) \tag{8}$$

**Etape 5** Nouvelle sélection des rendements scalaires discrets :

Classement dans l'ordre décroissant des valeurs propres de $\Sigma_k$ par une permutation $\sigma$.

**pour** $i = 1$ *à* $s_k$ **faire**

Avec $\lambda_{\sigma(i)}(\Sigma_k) = \lambda_{\sigma(i)}(\Sigma_k) + P_{res}$, choix du rendement discret à partir du nouveau $C_{k,i}$. Calcul et quantification de la puissance minimale, et mise à jour de $\lambda_{\sigma(i)}(\Sigma_k)$ et $P_{res}$.

**tant que** $\sum_{j=1}^{s_k} \lambda_{\sigma(j)}(\Sigma_k) > P_k$ **faire**

Sélection du rendement discret directement inférieur. Calcul et quantification de la puissance minimale, et mise à jour de $\lambda_{\sigma(i)}(\Sigma_k)$ et $P_{res}$.

Mise à jour de la matrice de covariance

**Etape 6** Allocation de la puissance résiduelle $P_{res}$ de manière à augmenter le budget de puissance du prochain groupe à traiter.

$$P_k = P_k - P_{res}$$
$$\begin{cases} P_{k+1} = P_{k+1} + P_{res} & \text{si } k < K \\ P_1 = P_1 + P_{res} & \text{sinon} \end{cases} \tag{9}$$

**ANNEXE B**

| Algorithme 2 |
| --- |

**Init** Initialisation de chaque matrice de covariance à zéro : $\{\Theta_{x_{\Delta_k}}\}_{k=1}^{K} = 0$

Le budget de puissance de chaque groupe est fixé à : $\{P_k\}_{k=1}^{K}$

**pour** $m = 1$ $à$ $M$ **faire**

    **pour** $n = 1$ $à$ $N$ **faire**

      **Etape 1** Génération des canaux composites :

$$\mathbf{G}_{\Delta_k} = \left(\sum_{j \neq k} \mathbf{H}_{\Delta_j} \Theta_{x_{\Delta_j}} \mathbf{H}_{\Delta_j}^{\dagger} + \mathbf{I}_{N_R}\right)^{-1/2} \mathbf{H}_{\Delta_k} \quad \forall k \in [1, K] \qquad (10)$$

      **Etape 2** Application du waterfilling sur les canaux effectifs avec la puissance totale $P$, c'est-à-dire, application du waterfilling sur une matrice bloc diagonale formée des $\mathbf{G}_{\Delta_k}, \forall k$. On obtient $\{\Sigma_k\}_{k=1}^{K}$.

      **Etape 3** Génération des matrices de covariance $\left\{\Theta_{x_{\Delta_k}}\right\}_{k=1}^{K}$ à partir de la matrice de précodage orthonormale $\mathbf{V}_k$ qui correspond aux vecteurs propres de $\mathbf{B}_k$.

**Etape 4** Allocation des rendements scalaires discrets :

**pour** $k = 1$ $à$ $K$ **faire**

    **pour** $i = 1$ $à$ $s_k$ **faire**

      Avec les $C_{k,i}$ calculés en équation (4), sélection du rendement discret correspondant, cf. équation (2). Calcul de la puissance minimale nécessaire pour supporter ce rendement (par exemple équation (6)), quantification et mise à jour de $\lambda_i(\Sigma_k)$.

      **tant que** $\sum_{j=1}^{s_k} \lambda_j(\Sigma_k) > P_k$ **faire**

        Sélection du rendement discret directement inférieur. Calcul de la puissance minimale pour ce rendement, quantification et mise à jour de $\lambda_i(\Sigma_k)$.

Ensuite, déduction de la puissance totale réellement consommée

$$P_{used} = \sum_{k=1}^{K} \sum_{i=1}^{s_k} \lambda_i(\Sigma_k) \qquad (11)$$

**Etape 5** Nouvelle sélection des rendements scalaires discrets avec la puissance résiduelle $P_{res} = P - P_{used}$ :

Classement dans l'ordre décroissant des valeurs propres de $\Sigma_k$ par une permutation $\sigma$.

**pour** $k = 1$ $à$ $K$ **faire**

    **pour** $i = 1$ $à$ $s_k$ **faire**

      Avec $\lambda_{\sigma(i)}(\Sigma_k) = \lambda_{\sigma(i)}(\Sigma_k) + P_{res}$, choix du rendement discret à partir du nouveau $C_{k,i}$. Calcul et quantification de la puissance minimale pour ce rendement, et mise à jour de $\lambda_{\sigma(i)}(\Sigma_k)$ et $P_{res}$.

      **tant que** $\sum_{j=1}^{s_k} \lambda_{\sigma(j)}(\Sigma_k) > P_k$ **faire**

        Sélection du rendement discret directement inférieur. Calcul et quantification de la puissance minimale, et mise à jour de $\lambda_{\sigma(i)}(\Sigma_k)$ et $P_{res}$.

    Mise à jour de la matrice de covariance

## ANNEXE C

| Algorithme 3 |
| --- |

**Init** Initialisation de chaque matrice de covariance à zéro : $\{\Theta_{x_{\Delta_k}}\}_{k=1}^{K} = 0$

Le budget de puissance de chaque groupe est fixé à : $\{P_k\}_{k=1}^{K}$

**pour** $m = 1$ $à$ $M$ **faire**

**pour** $k = 1$ $à$ $K$ **faire**

**Etape 1** Génération des canaux composites :

$$\mathbf{G}_{\Delta_k} = \left(\sum_{j \neq k} \mathbf{H}_{\Delta_j} \Theta_{x_{\Delta_j}} \mathbf{H}_{\Delta_j}^{\dagger} + \mathbf{I}_{N_R}\right)^{-1/2} \mathbf{H}_{\Delta_k} \tag{13}$$

**Etape 2** Application du waterfilling sur $\mathbf{G}_{\Delta_k}$ avec la puissance $P_k$. On obtient $\Sigma_k$.

**Etape 3** Calcul de la matrice de précodage $\mathbf{V}_k$ correspondant aux vecteurs propres de $\mathbf{B}_k$. Quantification de $\mathbf{V}_k$, c'est-à-dire choix de la matrice la plus proche dans le codebook disponible notée $\tilde{\mathbf{V}}_k$. Génération de la matrice de covariance $\Theta_{x_{\Delta_k}} = E\{\tilde{\mathbf{V}}_k \Sigma_k \tilde{\mathbf{V}}_k^{\dagger}\}$

**Etape 4** Allocation des rendements scalaires discrets :

**pour** $i \in \Delta_k$ **faire**

Avec les $C_i$ calculés en équation (12), sélection du rendement discret correspondant (similairement à équation (2)). Calcul de la puissance minimale nécessaire pour ce rendement, quantification et mise à jour de $\lambda_i(\Sigma_k)$.

**tant que** $\sum_{j \in \Delta_k} \lambda_j(\Sigma_k) > P_k$ **faire**

Sélection du rendement directement inférieur pour $C_i$. Calul et quantification de la puissance minimale, et mise à jour de $\lambda_i(\Sigma_k)$.

Ensuite, déduction de la puissance résiduelle du groupe $k$ :

$$P_{res} = P_k - \sum_{i \in \Delta_k} \lambda_i(\Sigma_k) \tag{14}$$

**Etape 5** Nouvelle sélection des rendements scalaires discrets : classement dans l'ordre décroissant des valeurs propres de $\Sigma_k$ par une permutation $\sigma$.

**pour** $i \in \Delta_k$ **faire**

Avec $\lambda_{\sigma(i)}(\Sigma_k) = \lambda_{\sigma(i)}(\Sigma_k) + P_{res}$, choix du rendement discret à partir du nouveau $C_i$. Calcul et quantification de la puissance minimale, et mise à jour de $\lambda_{\sigma(i)}(\Sigma_k)$ et $P_{res}$.

**tant que** $\sum_{j \in \Delta_k} \lambda_{\sigma(j)}(\Sigma_k) > P_k$ **faire**

Sélection du rendement discret directement inférieur $C_i$. Calcul et quantification de la puissance minimale, et mise à jour de $\lambda_{\sigma(i)}(\Sigma_k)$ et $P_{res}$.

Mise à jour de la matrice de covariance.

**Etape 6** Allocation de la puissance résiduelle $P_{res}$ de manière à augmenter le budget de puissance du prochain groupe à traiter.

$$P_k = P_k - P_{res}$$
$$\begin{cases} P_{k+1} = P_{k+1} + P_{res} & \text{si } k < K \\ P_1 = P_1 + P_{res} & \text{sinon} \end{cases} \tag{15}$$

**Revendications**

1. Procédé d'émission d'un signal d'un émetteur vers un récepteur via un canal de transmission, sous la forme d'un ensemble de flux de données entre $N_T$ antennes d'émission et $N_R$ antennes de réception, avec $N_T$ et $N_R$ supérieurs ou égaux à 2.

   ledit procédé comprenant une étape de répartition des antennes d'émission en plusieurs groupes d'au moins une antenne, au moins un groupe comprenant deux antennes, en fonction d'au moins une information représentative dudit canal de transmission ;
   **caractérisé en ce qu'**il comprend également :

   - une étape d'attribution d'un rendement à chacune desdites antennes d'émission ;
   - une étape d'allocation d'une puissance d'émission à chacun desdits flux de données ; et
   - une étape de précodage spatial dudit signal, mettant en oeuvre une matrice de précodage diagonale par blocs comprenant au moins deux blocs, chaque bloc étant associé à un desdits groupes d'antennes.

2. Procédé d'émission selon la revendication 1, **caractérisé en ce que** lesdits rendements sont choisis, en fonction d'au moins une contrainte imposée par ledit récepteur, parmi un ensemble prédéterminé de rendements discrets.

3. Procédé d'émission selon l'une quelconque des revendications 1 et 2, **caractérisé en ce que** ladite étape de précodage comprend une sous-étape d'obtention des vecteurs propres associés à chacun desdits blocs, de façon à transmettre ledit signal sur les valeurs propres non nulles de chacun des sous-canaux,
   un sous-canal correspondant au canal de transmission entre les antennes d'émission d'un desdits groupes, associé à un desdits blocs de la matrice de précodage, et lesdites antennes de réception.

4. Procédé d'émission selon l'une quelconque des revendications 1 à 3, **caractérisé en ce qu'**il comprend une étape de mise à jour d'au moins un élément appartenant au groupe comprenant :

   - au moins un desdits blocs ;
   - au moins un desdits rendements ;
   - au moins une desdites puissances d'émission ;
   - au moins un vecteur de précodage, chaque bloc de la matrice de précodage comprenant au moins un vecteur de précodage ;
   en fonction d'une information de retour dudit récepteur.

5. Procédé d'émission selon l'une quelconque des revendications 1 à 4, **caractérisé en ce qu'**il comprend une étape de réception d'au moins un élément appartenant au groupe comprenant :

   - une information relative à la répartition en groupes desdites antennes d'émission ;
   - ladite information représentative dudit canal de transmission ;
   - lesdits rendements attribués à chacune desdites antennes d'émission ;
   - ladite matrice de précodage ;
   - lesdits blocs formant ladite matrice de précodage ;
   - des vecteurs de précodage pour construire ladite matrice de précodage ;
   - des valeurs de puissance d'émission requise pour chacun desdits flux de données, pour chaque groupe d'antennes d'émission, ou pour l'ensemble des antennes d'émission.

6. Procédé d'émission selon l'une quelconque des revendications 1 à 5, **caractérisé en ce que** ladite étape de répartition est mise en oeuvre de façon périodique et/ou en fonction d'une variation dudit canal de transmission.

7. Produit programme d'ordinateur comprenant des instructions de code de programme mettant en oeuvre du procédé d'émission selon la revendication 1 lorsqu'il est exécuté par un ordinateur.

8. Emetteur apte à émettre un signal à destination d'un récepteur via un canal de transmission, sous la forme d'un ensemble de flux de données entre $N_T$ antennes d'émission et $N_R$ antennes de réception, avec $N_T$ et $N_R$ supérieurs ou égaux à 2,
   ledit émetteur comprenant des moyens de répartition des antennes d'émission en plusieurs groupes d'au moins une antenne, au moins un groupe comprenant deux antennes, en fonction d'au moins une information représentative dudit canal de transmission ;
**caractérisé en ce qu'**il comprend également :

- des moyens d'attribution d'un rendement à chacune desdites antennes d'émission ;
- des moyens d'allocation d'une puissance d'émission à chacun desdits flux de données ;
- des moyens de précodage spatial dudit signal, mettant en oeuvre une matrice de précodage diagonale par blocs comprenant au moins deux blocs, chaque bloc étant associé à un desdits groupes d'antennes.

9. Procédé de réception d'un signal reçu, correspondant à un signal émis par un émetteur à destination d'un récepteur via un canal de transmission, sous la forme d'un ensemble de flux de données entre $N_T$ antennes d'émission et $N_R$ antennes de réception, avec $N_T$ et $N_R$ supérieurs ou égaux à 2,
ledit procédé comprenant une étape d'obtention, en fonction d'une information représentative du canal de transmission, d'au moins une répartition desdites antennes d'émission en plusieurs groupes d'au moins une antenne, au moins un groupe comprenant deux antennes ;
**caractérisé en ce qu'**il comprend également :

- une étape de détermination d'un rendement à attribuer à chacune desdites antennes d'émission ;
- une étape de détermination d'une puissance d'émission à allouer à chacun desdits flux de données ;
- une étape de détermination d'une matrice de précodage diagonale par bloc comprenant au moins deux blocs, chaque bloc étant associé à un desdits groupes d'antennes ; et
- une étape de transmission audit émetteur desdits rendements, desdites puissances d'émission, et de ladite matrice de précodage.

10. Procédé de réception selon la revendication 9, **caractérisé en ce que** lesdits rendements sont choisis parmi un ensemble prédéterminé de rendements discrets.

11. Procédé de réception selon l'une quelconque des revendications 9 et 10, **caractérisé en ce que** ledit récepteur est un récepteur à annulations successives d'interférences.

12. Produit programmé d'ordinateur comprenant des instructions de code de programme mettant en oeuvre du procédé de réception selon la revendication 9 lorsqu'il est exécuté par un ordinateur.

13. Récepteur apte à recevoir un signal reçu, correspondant à un signal émis par un émetteur via un canal de transmission, sous la forme d'un ensemble de flux de données entre $N_T$ antennes d'émission et $N_R$ antennes de réception, avec $N_T$ et $N_R$ supérieurs ou égaux à 2,
ledit récepteur comprenant des moyens d'obtention, en fonction d'une information représentative du canal de transmission, d'au moins une répartition desdites antennes d'émission en plusieurs groupes d'au moins une antenne, au moins un groupe comprenant deux antennes ;
**caractérisé en ce qu'**il comprend également :

- des moyens de détermination d'un rendement à attribuer à chacune desdites antennes d'émission ;
- des moyens de détermination d'une puissance d'émission à allouer à chacun desdits flux de données ;
- des moyens de détermination d'une matrice de précodage diagonale par bloc comprenant au moins deux blocs, chaque bloc étant associé à un desdits groupes d'antennes ; et
- des moyens de transmission audit émetteur desdits rendements, desdites puissances d'émission et de ladite matrice de précodage.

14. Système de transmission formé d'un émetteur comprenant $N_T$ antennes d'émission et d'un récepteur comprenant $N_R$ antennes de réception avec $N_T$ et $N_R$ supérieurs ou égaux à 2,

ledit émetteur étant apte à émettre un signal à destination dudit récepteur via un canal de transmission, sous la forme d'un ensemble de flux de données entre lesdites $N_T$ antennes d'émission et lesdites $N_R$ antennes de réception,
ledit récepteur comprenant des moyens d'obtention, en fonction d'une information représentative dudit canal de transmission, d'au moins une répartition desdites antennes d'émission en plusieurs groupes d'au moins une antenne, au moins un groupe comprenant deux antennes,
ledit émetteur comprenant des moyens de répartition des antennes d'émission selon ladite répartition ;
**caractérisé en ce que** ledit récepteur comprend également :

- des moyens de détermination d'un rendement à attribuer à chacune desdites antennes d'émission ;
- des moyens de détermination d'une puissance d'émission à allouer à chacun desdits flux de données ;
- des moyens de détermination d'une matrice de précodage diagonale par bloc comprenant au moins deux blocs, chaque bloc étant associé à un desdits groupes d'antennes ; et
- des moyens de transmission audit émetteur desdits rendements, desdites puissances d'émission, et de ladite matrice de précodage ;

et **en ce que** ledit émetteur comprend également :

- des moyens d'attribution desdits rendements auxdites antennes d'émission ;
- des moyens d'allocation desdites puissances d'émission auxdits flux de données ;
- des moyens de précodage spatial dudit signal à émettre, mettant en oeuvre ladite matrice de précodage.

**Claims**

1. Method for sending a signal from a sender to a receiver through a transmission channel, in the form of a set of data streams between $N_T$ sending antennas and $N_R$ receiving antennas, with $N_T$ and $N_R$ being greater than or equal to 2,

   said method comprising a step of distributing the sending antennas among several groups of at least one antenna, at least one group comprising two antennas, as a function of at least one piece of information representing said transmission channel;
   **characterized in that** it also comprises:
   - a step of assigning a rate value to each of said sending antennas;
   - a step of allocating a sending power value to each of said data streams; and
   - a step of spatially pre-encoding said signal, implementing a block diagonal pre-encoding matrix comprising at least two blocks, each block being associated with one of said groups of antennas.

2. Method for sending according to Claim 1, **characterized in that** said rate values are chosen, as a function of at least one constraint dictated by said receiver, from a predetermined set of discrete rate values.

3. Method for sending according to either of Claims 1 and 2, **characterized in that** said pre-encoding step comprises a sub step for obtaining eigen vectors associated with each of said blocks so as to transmit said signal on the non-zero eigen values of each of the sub-channels,
   a sub-channel corresponding to the transmission channel between the sending antennas of one of said groups, associated with one of said blocks of the pre-encoding matrix, and said receiving antennas.

4. Method for sending according to any one of Claims 1 to 3, **characterized in that** the method comprises a step of updating at least one element belonging to the group comprising:

   - at least one of said blocks;
   - at least one of said rate values;
   - at least one of said sending power values;
   - at least one pre-encoding vector, each block of the pre-encoding matrix comprising at least one pre-encoding vector;
   as a function of a piece of feedback information from said receiver.

5. Method for sending according to any one of Claims 1 to 4, **characterized in that** the method comprises a step of receiving at least one element belonging to the group comprising:

   - a piece of information on the distributing into groups of said sending antennas;
   - said information representing said transmission channel;
   - said rate values assigned to each of said sending antennas;
   - said pre-encoding matrix;
   - said blocks forming said pre-encoding matrix;
   - pre-encoding vectors to build said pre-encoding matrix;
   - sending power values required for each of said data streams, for each group of sending antennas or for all the sending antennas.

**6.** Method for sending according to any one of Claims 1 to 5, **characterized in that** the step of distributing is implemented periodically and/or as a function of a variation of said transmission channel.

**7.** Computer program product comprising program code instructions implementing the method for sending according to Claim 1 when it is executed by a computer.

**8.** Sender capable of sending a signal to a receiver through a transmission channel, in the form of a set of data streams between $N_T$ sending antennas and $N_R$ receiving antennas, with $N_T$ and $N_R$ being greater than or equal to 2,

said sender comprising means for distributing the sending antennas among several groups of at least one antenna, at least one group comprising two antennas, as a function of at least one piece of information representing said transmission channel;
**characterized in that** it also comprises:
- means for assigning a rate value to each of said sending antennas;
- means for allocating a sending power value to each of said data streams; and
- means for spatially pre-encoding said signal, implementing a block diagonal pre-encoding matrix comprising at least two blocks, each block being associated with one of said groups of antennas.

**9.** Method for receiving a received signal, corresponding to a signal sent by a sender to a receiver through a transmission channel, in the form of a set of data streams between $N_T$ sending antennas and $N_R$ receiving antennas, with $N_T$ and $N_R$ being greater than or equal to 2,
said method comprising a step of obtaining, as a function of a piece of information representing the transmission channel, at least one distribution of said sending antennas in several groups of at least one antenna, at least one group comprising two antennas;
**characterized in that** it also comprises:

- a step of determining a rate value to be assigned to each of said sending antennas;
- a step of determining a sending power value to be allocated to each data stream;
- a step of determining a block diagonal pre-encoding matrix comprising at least two blocks, each block being associated with one of said groups of antennas; and
- a step of transmitting said rate values, said sending power values, and said pre-encoding matrix to the sender.

**10.** Method for receiving according to Claim 9, **characterized in that** said rate values are chosen from a predetermined set of discrete rate values.

**11.** Method for receiving according to either of Claims 9 and 10, **characterized in that** said receiver is a successive interference cancellation type of receiver.

**12.** Computer program product comprising program code instructions implementing the method for receiving according to Claim 9 when it is executed by a computer.

**13.** Receiver capable of receiving a received signal, corresponding to a signal sent by a sender through a transmission channel, in the form of a set of data streams between $N_T$ sending antennas and $N_R$ receiving antennas, with $N_T$ and $N_R$ being greater than or equal to 2,
said receiver comprising means for obtaining, as a function of a piece of information representing the transmission channel, at least one distribution of sending antennas in several groups of at least one antenna, at least one group comprising two antennas;
**characterized in that** it also comprises:

- means for determining a rate value to be assigned to each of said sending antennas;
- means for determining a sending power value to be allocated to each of said data streams;
- means for determining a block diagonal pre-encoding matrix comprising at least two blocks, each block being associated with one of said groups of antennas; and
- means for transmitting said rate values, said sending power values, and said pre-encoding matrix to said sender.

**14.** System for transmitting comprising a sender comprising $N_T$ sending antennas and a receiver comprising $N_R$ receiving antennas, with $N_T$ and $N_R$ being greater than or equal to 2,
said system being capable of sending a signal to said receiver through a transmission channel, in the form of a set of data streams between the $N_T$ sending antennas and the $N_R$ receiving antennas,
said receiver comprising means for obtaining, as a function of a piece of information representing said transmission channel, at least one distribution of said sending antennas in several groups of at least one antenna, at least one group comprising two antennas,
said sender comprising means for distributing the sending antennas according to said distribution; **characterized in that** said receiver also comprises:

- means for determining a rate value to be assigned to each of said sending antennas;
- means for determining a sending power value to be allocated to each of said data streams;
- means for determining a block diagonal pre-encoding matrix comprising at least two blocks, each block being associated with one of said groups of antennas; and
- means for transmitting, to said sender, said rate values, said sending power values and said pre-encoding matrix;

and **in that** said sender also comprises:
- means for assigning said rate values to said sending antennas;
- means for allocating said sending power values to said data streams;
- means for spatially pre-encoding said signal to be sent, implementing said pre-encoding matrix.

**Patentansprüche**

1. Verfahren zum Senden eines Signals von einem Sender zu einem Empfänger über einen Übertragungskanal in Form einer Datenflusseinheit zwischen $N_T$ Sendeantennen und $N_R$ Empfangsantennen, mit $N_T$ und $N_R$ höher als oder gleich 2,

   wobei das Verfahren einen Schritt der Verteilung der Sendeantennen auf mehrere Gruppen von mindestens einer Antenne enthält, wobei mindestens eine Gruppe zwei Antennen enthält, in Abhängigkeit von mindestens einer Information, die für den Übertragungskanal repräsentativ ist;
   **dadurch gekennzeichnet, dass** es ebenfalls enthält:

   - einen Schritt der Zuteilung eines Wirkungsgrade zu jeder der Sendeantennen;
   - einen Schritt der Zuweisung einer Sendeleistung zu jedem der Datenflüsse; und
   - einen Schritt der räumlichen Vorcodierung des Signals, der eine Diagonalmatrix zur blockweisen Vorcodierung verwendet, die mindestens zwei Blöcke enthält, wobei jeder Block einer der Antennengruppen zugeordnet ist.

2. Sendeverfahren nach Anspruch 1, **dadurch gekennzeichnet, dass** die Wirkungsgrade in Abhängigkeit von mindestens einer vom Empfänger vorgegebenen Beschränkung unter einer vorbestimmten Einheit von diskreten Wirkungsgraden ausgewählt werden.

3. Sendeverfahren nach einem der Ansprüche 1 und 2, **dadurch gekennzeichnet, dass** der Schritt der Vorcodierung einen Teilschritt des Erhalts der jedem der Blöcke zugeordneter Eigenvektoren enthält, um das Signal auf die Eigenwerte ungleich Null jedes der Teilkanäle zu übertragen,
   wobei ein Teilkanal dem Übertragungskanal zwischen den Sendeantennen einer der Gruppen, die einem der Blöcke der Vorcodierungsmatrix zugeordnet ist, und den Empfangsantennen entspricht.

4. Sendeverfahren nach einem der Ansprüche 1 bis 3, **dadurch gekennzeichnet, dass** es einen Schritt der Aktualisierung mindestens eines Elements enthält, das zu der Gruppe gehört, die enthält:

   - mindestens einen der Blöcke;
   - mindestens einen der Wirkungsgrade;
   - mindestens eine der Sendeleistungen;
   - mindestens einen Vorcodiervektor, wobei jeder Block der Vorcodiermatrix mindestens einen Vorcodiervektor enthält;
   in Abhängigkeit von einer Rückinformation des Empfängers.

5. Sendeverfahren nach einem der Ansprüche 1 bis 4, **dadurch gekennzeichnet, dass** es einen Schritt des Empfangs mindestens eines Elements enthält, das zu der Gruppe gehört, die enthält:

- eine Information bezüglich der Verteilung der Sendeantennen in Gruppen;
- die für den Übertragungskanal repräsentative Information;
- die jeder der Sendeantennen zugeteilten Wirkungsgrade;
- die Vorcodiermatrix;
- die die Vorcodiermatrix bildenden Blöcke;
- Vorcodiervektoren für den Aufbau der Vorcodiermatrix;
- Werte der für jeden der Datenflüsse erforderlichen Sendeleistung für jede Gruppe von Sendeantennen oder für die Gesamtheit der Sendeantennen.

6. Sendeverfahren nach einem der Ansprüche 1 bis 5, **dadurch gekennzeichnet, dass** der Schritt der Verteilung periodisch und/oder in Abhängigkeit von einer Veränderung des Übertragungskanals angewendet wird.

7. Computerprogrammprodukt, das Programmcodeanweisungen enthält, die das Sendeverfahren nach Anspruch 1 verwenden, wenn es von einem Computer ausgeführt wird.

8. Sender, der über einen Übertragungskanal ein Signal in Form einer Datenflusseinheit zwischen $N_T$ Sendeantennen und $N_R$ Empfangsantennen an einen Empfänger senden kann, mit $N_T$ und $N_R$ größer als oder gleich 2,

wobei der Sender Einrichtungen zur Verteilung der Sendeantennen in mehrere Gruppen von mindestens einer Antenne enthält, wobei mindestens eine Gruppe zwei Antennen enthält, in Abhängigkeit von mindestens einer Information, die für den Übertragungskanal repräsentativ ist;
**dadurch gekennzeichnet, dass** er ebenfalls enthält:

- Einrichtungen zur Zuteilung eines Wirkungsgrads zu jeder der Sendeantennen;
- Einrichtungen zur Zuweisung einer Sendeleistung zu jedem der Datenflüsse;
- Einrichtungen zur räumlichen Vorcodierung des Signals, die eine Diagonalmatrix zur blockweisen Vorcodierung verwenden, die mindestens zwei Blöcke enthält, wobei jeder Block einer der Antennengruppen zugeordnet ist.

9. Verfahren zum Empfang eines empfangenen Signals, das einem von einem Sender über einen Übertragungskanal an einen Empfänger gesendeten Signal in Form einer Datenflusseinheit zwischen $N_T$ Sendeantennen und $N_R$ Empfangsantennen entspricht, mit $N_T$ und $N_R$ größer als oder gleich 2,

wobei das Verfahren einen Schritt des Erhalts, in Abhängigkeit von einer für den Übertragungskanal repräsentativen Information, mindestens einer Verteilung der Sendeantennen in mehrere Gruppen von mindestens einer Antenne enthält, wobei mindestens eine Gruppe zwei Antennen enthält;
**dadurch gekennzeichnet, dass** es ebenfalls enthält:

- einen Schritt der Bestimmung eines jeder der Sendeantennen zuzuteilenden Wirkungsgrads;
- einen Schritt der Bestimmung einer jedem der Datenflüsse zuzuweisenden Sendeleistung;
- einen Schritt der Bestimmung einer Diagonalmatrix zur blockweisen Vorcodierung, die mindestens zwei Blöcke enthält, wobei jeder Block einer der Antennengruppen zugeordnet ist; und
- einen Schritt der Übertragung der Wirkungsgrade, der Sendeleistungen und der Vorcodiermatrix an den Sender.

10. Empfangsverfahren nach Anspruch 9, **dadurch gekennzeichnet, dass** die Wirkungsgrade aus einer vorbestimmten Einheit von diskreten Wirkungsgraden ausgewählt werden.

11. Empfangsverfahren nach einem der Ansprüche 9 und 10, **dadurch gekennzeichnet, dass** der Empfänger ein Empfänger mit aufeinanderfolgenden Interferenzaufhebungen ist.

12. Computerprogrammprodukt, das Programmcodeanweisungen enthält, die das Empfangsverfahren nach Anspruch 9 verwenden, wenn es auf einem Computer ausgeführt wird.

13. Empfänger, der ein empfangenes Signal empfangen kann, das einem Signal entspricht, welches von einem Sender über einen Übertragungskanal in Form einer Einheit von Datenflüssen zwischen $N_T$ Sendeantennen und $N_R$ Empfangsantennen gesendet wird, mit $N_T$ und $N_R$ höher als oder gleich 2,

wobei der Empfänger Einrichtungen für den Erhalt, in Abhängigkeit von einer für den Übertragungskanal repräsentativen Information, von mindestens einer Verteilung der Sendeantennen in mehrere Gruppen von mindestens einer Antenne enthält, wobei mindestens eine Gruppe zwei Antennen enthält;
**dadurch gekennzeichnet, dass** er ebenfalls enthält:

- Einrichtungen zur Bestimmung eines jeder der Sendeantennen zuzuteilenden Wirkungsgrads;
- Einrichtungen zur Bestimmung einer jedem der Datenflüsse zuzuweisenden Sendeleistung;
- Einrichtungen zur Bestimmung einer Diagonalmatrix zur blockweisen Vorcodierung, die mindestens zwei Blöcke enthält, wobei jeder Block einer der Antennengruppen zugeordnet ist; und
- Einrichtungen zur Übertragung der Wirkungsgrade, der Sendeleistungen und der Vorcodiermatrix an den Sender.

14. Übertragungssystem, das von einem Sender, der $N_T$ Sendeantennen enthält, und von einem Empfänger, der $N_R$ Empfangsantennen enthält, gebildet wird, mit $N_T$ und $N_R$ größer als oder gleich 2,

wobei der Sender über einen Übertragungskanal ein Signal in Form einer Datenflusseinheit zwischen den $N_T$ Sendeantennen und den $N_R$ Empfangsantennen an den Empfänger senden kann, wobei der Empfänger Einrichtungen für den Erhalt, in Abhängigkeit von einer für den Übertragungskanal repräsentativen Information, mindestens einer Verteilung der Sendeantennen in mehrere Gruppen von mindestens einer Antenne enthält, wobei mindestens eine Gruppe zwei Antennen enthält,
wobei der Sender Einrichtungen zur Verteilung der Sendeantennen gemäß der Verteilung enthält; **dadurch gekennzeichnet, dass** der Empfänger ebenfalls enthält:

- Einrichtungen zur Bestimmung eines jeder der Sendeantennen zuzuteilenden Wirkungsgrads;
- Einrichtungen zur Bestimmung einer jedem der Datenflüsse zuzuweisenden Sendeleistung,
- Einrichtungen zur Bestimmung einer Diagonalmatrix zur blockweisen Vorcodierung, die mindestens zwei Blöcke enthält, wobei jeder Block einer der Antennengruppen zugeordnet ist; und
- Einrichtungen zur Übertragung der Wirkungsgrade, der Sendeleistungen und der Vorcodiermatrix an den Sender;

und dass der Sender ebenfalls enthält:

- Einrichtungen zur Zuteilung der Wirkungsgrade zu den Sendeantennen;
- Einrichtungen zur Zuweisung der Sendeleistungen zu den Datenflüssen;
- Einrichtungen zur räumlichen Vorcodierung des zu sendenden Signals, die die Vorcodiermatrix verwenden.

Fig. 1

Fig. 2

Fig. 3

Fig. 4

Fig. 5

Fig. 6

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **P. Layec ; R. Visoz ; A.O. Berthet.** Achieving High Spectral Efficience with Adaptive Layered Space Time Codes under Rate Control. *ICC 2007 - IEEE,* 2007